Europäisches Patentamt

(19) European Patent Office

Office européen des brevets

(11) Publication number: **0 096 078**

**B1**

(12) **EUROPEAN PATENT SPECIFICATION**

(45) Date of publication of patent specification: **25.03.87**

(21) Application number: **82903590.6**

(22) Date of filing: **11.12.82**

(86) International application number:
**PCT/JP82/00463**

(87) International publication number:
**WO 83/02159 23.06.83 Gazette 83/15**

(51) Int. Cl.⁴: **G 01 N 27/80**

(54) **METHOD OF MEASURING ON-LINE HARDNESS OF STEEL PLATE.**

(30) Priority: **14.12.81 JP 200135/81**

(43) Date of publication of application:
**21.12.83 Bulletin 83/51**

(45) Publication of the grant of the patent:
**25.03.87 Bulletin 87/13**

(84) Designated Contracting States:
**DE FR GB SE**

(56) References cited:
**AU-A- 502 779**
**BE-A- 677 084**
**GB-A-1 076 168**
**JP-A-49 125 072**
**US-A-3 432 747**
**US-A-3 748 575**
**US-A-3 939 404**

(73) Proprietor: **KAWASAKI STEEL CORPORATION**
**No. 1-28, 1-Chome Kitahonmachi-Dori**
**Chuo-Ku, Kobe-Shi Hyogo 651 (JP)**

(72) Inventor: **AKIYAMA, Mamoru**
**20-6, Minami-cho 2-chome**
**Chiba-shi Chiba 280 (JP)**
Inventor: **TAKAHASHI, Satoru**
**20-5, Chuodai 2-chome Shisuimachi**
**Inba-gun Chiba 285 (JP)**
Inventor: **TAMIYA, Toshio**
**20-5, Chishirodainishi 1-chome**
**Chiba-shi Chiba 280 (JP)**

(74) Representative: **Pendlebury, Anthony et al**
**Page, White & Farrer 5 Plough Place New Fetter**
**Lane**
**London EC4A 1HY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a method of measuring on-line the hardness of a steel plate.

Since the hardness of a cold roller steel plate and the like, being related to the mechanical strength and the like in general, it is frequently used as a factor of controlling the mechanical properties.

In order to make it possible that the hardness of the steel plate is nondestructively and continuously measured on-line over the total length of the steel plate, there have heretofore been proposed various methods of measuring the hardness based on the correlation between the magnetic properties and the hardness of the steel plate.

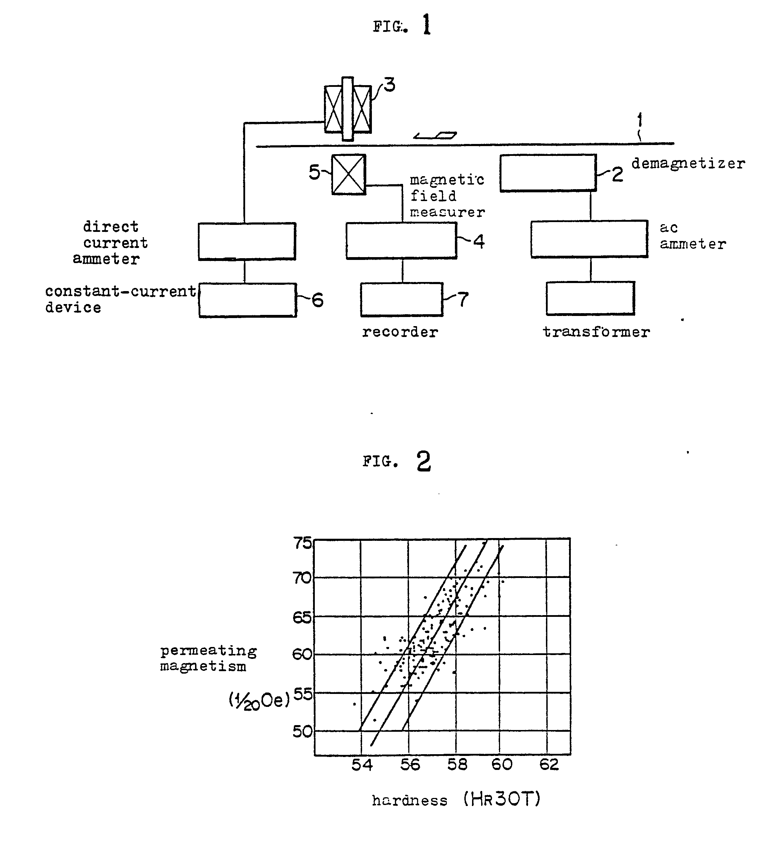

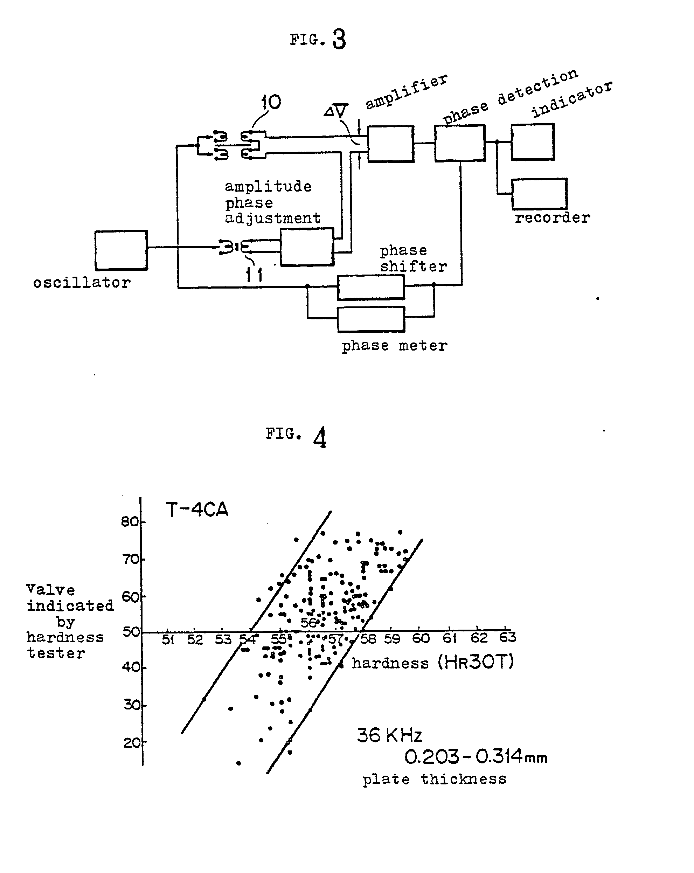

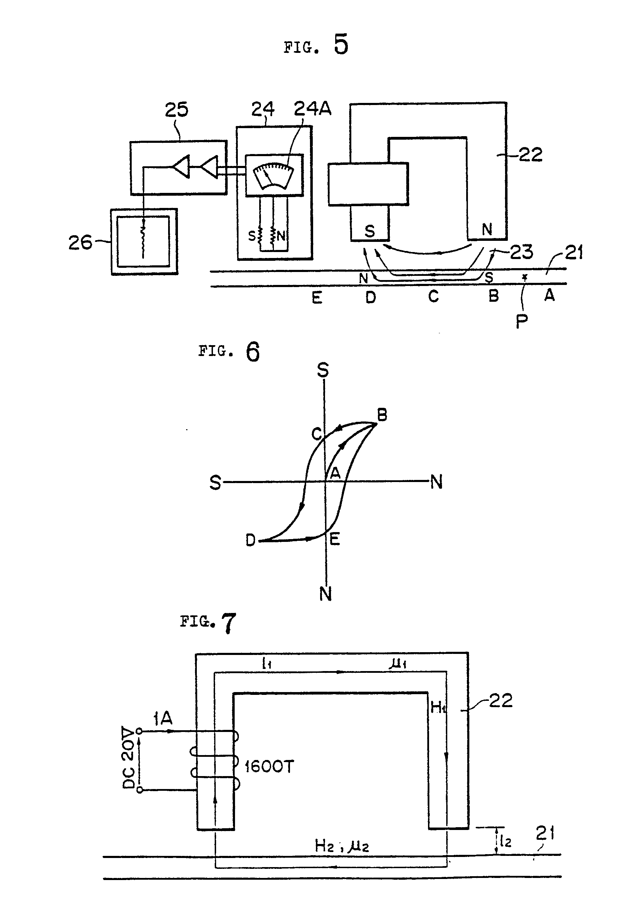

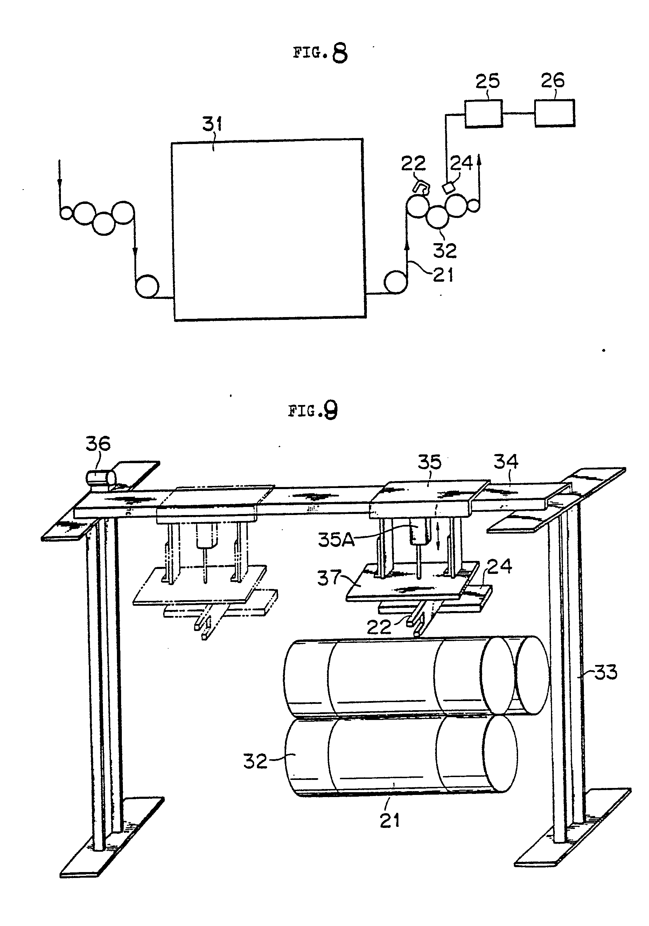

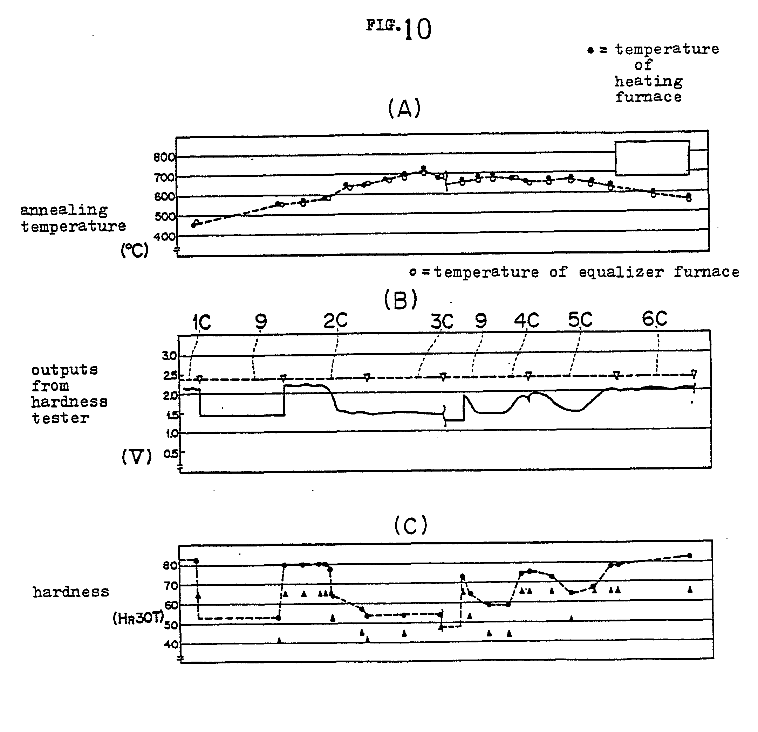

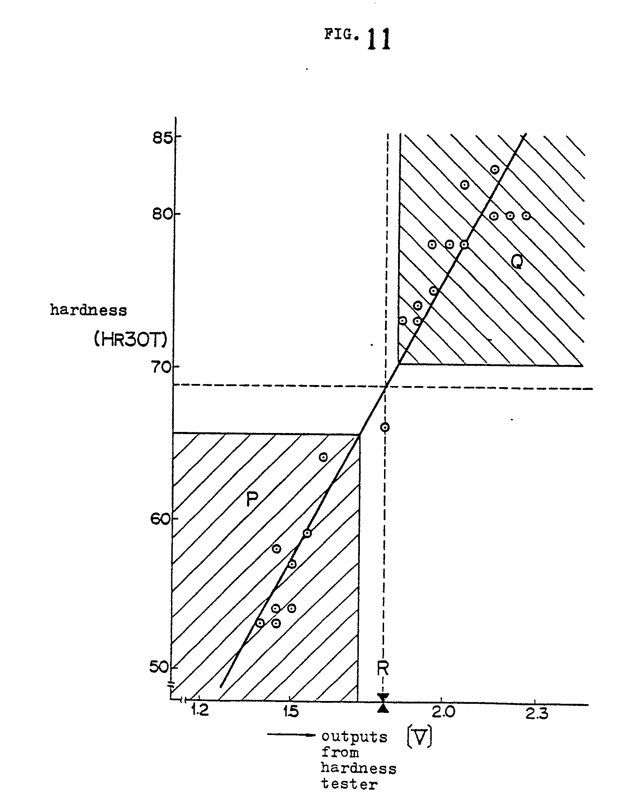

Fig. 1 is a block diagram showing the method of measuring the hardness as described in "Tetsu to Hagane (literally, Iron and Steel) (issued by the Iron and Steel Institute of Japan) Vol. 51, No. 5, Pages 88 to 90". More specifically, according to this method, a demagnetizer 2 excited by an alternating current is disposed at the forward position in the advancing direction of a steel plate 1, whereby the residual magnetism in the steel plate 1 is demagnetized. A measuring head is provided rearwardly of the demagnetizer 2, an electromagnet 3 excited by a direct current is disposed on an upper box of the measuring head, and a detecting portion 5 of a magnetic field measurer 4 is assembled into a lower box of the measuring head. This electromagnet 3 always generates a constant static magnetic field by a constant current supplied from a constant-current device 6. Applied to the detecting portion 5 is a magnetic field (permeating magnetism), which is changed through the magnetization of the steel plate 1, this magnetic field is measured by the magnetic field measurer 4, and an output therefrom is recorded by a recorder 7. Here, the permeating magnetism measured by the magnetic field measurer 4 has a close correlation with the hardness of the steel plate 1, so that the hardness distribution of the steel plate 1 in the longitudinal direction can be obtained through the record of the aforesaid recorder 7. However, according to the measuring method as shown in Fig. 1, there occur great dispersions in the measuring accuracy due to fluctuations in a pass line and adverse effects of the plate thickness as indicated by the results of measurement as shown in Fig. 2.

Fig. 3 is a block diagram showing the method of measuring the hardness as described in "Journal Nondestructive Inspection (issued by the Japanese Society for Nondestructive Inspection), Vol. 21, No. 7, Pages 401 through 408". More specifically, according to this method, there is measured a secondary coil induction voltage induced by both a magnetic field generated by a current flowing through a primary coil and a magnetic field generated by an eddy current flowing through the steel plate, so that the hardness of the steel plate can be measured on the basis of the correlation between the secondary coil induction voltage and the magnetic permeability and the correlation between the hardness of the steel plate and the magnetic permeability. In addition, according to this method of measuring the hardness, when a standard hardness plate A is inserted into a detection coil 10, a balance thereof with a standard coil 11 is kept by an amplitude phase adjusting device, and input voltage $\Delta VA$ fed to an amplifier is set at zero, and thereafter, a voltage $\Delta VB$ at the time of inserting a standard hardness plate B in place of the standard hardness plate A is held at a predetermined value, to thereby control the sensitivity. Upon controlling the sensitivity, the detection coil 10 is inserted into the on-line and the measurement is started. However, according to the method of measuring the hardness as shown in Fig. 3, there occur great dispersions in the measuring accuracy due to the adverse effects of fluctuations in the pass line as indicated by the results of measurement as shown in Fig. 4.

More specifically, according to the conventional method of measuring the hardness, there is adopted a system where the steel plate is clamped, whereby, when fluctuations in the pass line occur, a gap formed between the measuring device and the steel plate is fluctuated, so that great dispersions occur in the measuring accuracy. Furthermore, the magnetization is made in a manner to clamp the steel plate, magnetic poles are disposed in the direction of the plate thickness. Under this system, it is impossible to magnetically saturate the steel plate.

BE—A—677086 discloses a method of measuring on-line the hardness of a steel plate, wherein the steel plate and an electromagnet excited by a pulsed direct current are opposed to each other, the steel plate is movable along a first direction relative to the electromagnet, both north and south poles of the electromagnet are spaced apart from each other in the first direction, the electromagnet magnetises the steel plate, the strength of residual magnetism is measured by a detector and the hardness of the steel plate is sought on the basis of the strength of the measured residual magnetism.

GB—A—1076168 discloses a method of continuously determining a metallurgical property of strip, rod, wire or sheet material along its length, comprising passing the material around, and in engagement with, a roll, passing the material during engagement with the roll through a unidirectional magnetic field to saturate the material and then past a detector determining the magnitude of the resultant residual magnetism in the material, and hence a metallurgical property of the material. In a further embodiment the saturated material is passed through a non-saturating uni-directional magnetic field of opposite sense before moving the material past the detector.

US—A—3432747 discloses a non-contact magnetic, hence physical, hardness gauge having a pulsed recording head spaced from relatively moving steel strip. Magnetic spots thus placed on the strip are later picked up by a likewise spaced-from-strip pickup transducer whose output signal is amplified, integrated and read out as a measure of sample hardness.

JP—A—49/125072 discloses a method of continuously measuring residual magnetism comprising: magnetizing a continuously moving object so as to form a continuous belt-like magnetized zone parallel to the direction of movement of said object; and sensing the residual magnetism in said magnetized zone by moving a pair of detectors transversely of said magnetized zone, said detectors being disposed at a predetermined distance from each other across the thickness of said object.

The present invention has as its object the provision of a method of measuring on-line the hardness of a steel plate, capable of measuring the hardness of the steel plate with high accuracy.

The present invention accordingly provides a method of measuring on-line the hardness of a steel plate, wherein the steel plate and an electromagnet excited by a direct current are opposed to each other, the steel plate is movable along a first direction relative to the electromagnet, both north and south poles of the electromagnet are spaced apart from each other in the first direction, the electromagnet magnetises the steel plate, the strength of residual magnetism is measured by a detector and the hardness of the steel plate is sought on the basis of the strength of the measured residual magnetism, characterised in that a portion of the steel plate is continuously magnetically saturated by one of the magnetic poles of the electromagnet and is then continuously magnetically saturated in the reverse direction by the other of the magnetic poles of the electromagnet, and the strength of residual magnetism at the portion magnetically saturated is measured by the detector, and in that the detector is fixedly arranged relative to the downstream side of the electromagnet.

In consequence, the hardness of the steel plate can be measured with high accuracy by means of measuring the electromagnet and the residual magnetism without clamping the steel plate.

Embodiments of the present invention will now be described by way of example only with reference to the accompanying drawings, in which:—

Fig. 1 is a block diagram showing an example of the method of measuring the hardness of the prior art;

Fig. 2 is a graphic chart showing the results of measurement thereof;

Fig. 3 is a block diagram showing another example of the method of measuring the hardness of the prior art;

Fig. 4 is a graphic chart showing the results of measurement thereof;

Fig. 5 is an explanatory view showing the principle of measurement according to the present invention;

Fig. 6 is a historical graphic chart showing the process of magnetization of the steel plate as shown in Fig. 5;

Fig. 7 is an explanatory view, in which the electromagnet and steel plate as shown in Fig. 5 are taken out and illustrated;

Fig. 8 is an arrangement view showing an annealing line, to which is applied the present invention;

Fig. 9 is a perspective view showing the on-line measuring device provided in Fig. 8;

Figs. 10(A) through 10(C) are graphic charts showing the results of working of the present invention; and

Fig. 11 is a graphic chart showing the correlation between outputs from the hardness tester and the actual Rockwell hardness in the results of the working.

Detailed description will hereunder be given of the present invention.

Fig. 5 is an explanatory view showing the principle of measurement according to the present invention. An electromagnet 22 excited by a direct current is disposed in opposed relationship to the surface of a steel plate 21 running continuously, and a positive magnetic pole (pole N) and a negative magnetic pole (pole S) are spaced apart from each other in the running direction of the steel plate 21. In consequence, an arbitrary measuring point P of the steel plate 21 is adapted to move under the influence of a magnetic line of force generated from the positive magnetic pole to the negative magnetic pole of the electromagnet 22 and subsequently magnetized in accordance with the history shown in Fig. 6. More specifically, in Fig. 6, the abscissa represents the strength of the magnetic field to be magnetized and the ordinate indicates the residual magnetic flux in the steel plate due to the magnetization. Even if the steel plate 21 is magnetized before it enters the position A, the steel plate 21 is magnetically saturated at the position B by the positive magnetic pole so as to be demagnetized, thereafter, magnetically saturated in the reverse direction at the position D by the negative magnetic pole, and finally, the residual magnetism is held at the position E. The strength of the residual magnetism is detected by a detector 24 from the steel plate 21, which has passed under the influence of the magnetic line of force of the electromagnet 22 and holds the residual magnetism, as described above. As shown in Fig. 5, the detector 24 has sensors for sensing the pole N and S. In the normal condition with no magnetic field therearound, both sensors are kept in balance with their outputs being at zero. The steel plate 21 is magnetized by the pole N as described above, whereby, when this steel plate 21 approaches the aforesaid both sensors, a coil of the sensor for sensing the pole N is excited by the pole N of the steel plate 21, the balance between coils of both sensors is lost and a current flows through the coil of excitation, so that the value of this current can be indicated by a gauss meter 24A. The strength of the residual magnetism detected by the detector 24 as described above is amplified by a transducer 25, where the magnetism is further converted into a hardness, which is recorded by a recorder 28.

Here, the strength of the aforesaid residual magnetism of the steel plate 21 is correlated with the hardness of the steel plate 21 as will be described hereunder, so that the hardness of the steel plate 21 can be sought through the results of the record of the aforesaid recorder 26. More specifically, a step of crystal grains is conceivable between the residual magnetism and the hardness. It is known that there is the following relationship between the yield point of steel and the size of crystal grains.

$$\sigma_{LYP} = \sigma_o + Kl^{-1/2}$$

where $\sigma_{LYP}$ indicates the lower yield point, $\sigma_o$ the lower yield point of single crystal, l the diameter of single crystal and K a constant.

Since the press hardness is intended for measuring the plastic deformation resistance, it is conceivable that the yield point in the above equation is replaced by the hardness. In other words, the correlation between the hardness and the crystal grains can be recognized. Now, study is made on the relationship between the residual magnetism and the crystal grains. The steel plate having large crystal grains can be easily magnetized, and the steel plate being small in crystal grain size can be not easily magnetized. As compared with the steel plate being smaller in crystal grain, the steel plate being larger in crystal grain size has less crystal grains in number per unit area than the former, and accordingly, has the residual magnetism lower in value. On the contrary, the steel plate being smaller in crystal grain has more crystal grains in number per unit area, and accordingly, has the residual magnetism higher in value. In other words, the higher residual magnetism the steel plate has, the hardness thereof is higher, and, the lower residual magnetism the steel plate has, the hardness thereof is lower. Thus, the hardness can be measured through the measurement of the residual magnetism.

The aforesaid electromagnet 22 can magnetically saturate the steel plate 21 to a full extent in such a manner as will be described hereunder. More specifically, as shown in Fig. 7 under the conditions where the core is formed of carbon steel, a voltage of direct current applied to a coil terminal is 20 V, a current to flow through the coil is 1A and the density of the magnetic flux of the electromagnet 22 is 1600T. The magnetic permeability of vacuum is $\mu_o$ and the relative magnetic permeability is $\mu_s$, the lengths of magnetic paths, magnetic permeabilities and strengths of magnetic fields of the steel plate 21 and electromagnet 22 are $l_1$, $\mu_1$ and $H_1$, respectively and the length, magnetic permeability and strength of magnetic field of a vacant space are $l_2$, $\mu2$ and $H_2$, respectively, a magnetomotive force U is represented by the following equation.

$$U = H_1 l_1 + 2H_2 l_2 = 1600[AT] \qquad (1)$$

Since there is a relationship of

$$\mu_1 H_1 = \mu_2 H_2$$

the ratio between the strength of magnetic field $H_2$ of the vacant space and the strength of magnetic field $H_1$ of the iron portion is represented by the following equation, and becomes equal to the relative magnetic permeability of iron.

$$\frac{H_2}{H_1} = \frac{\mu_1}{\mu_2} = \frac{\mu_1}{\mu_0} = \mu_s \qquad (2)$$

Since the relative magnetic permeability $\mu_s$ of iron is $10^3$ to $10^4$, if $\mu_s$ is set at $10^3$, then the following equation will be obtained.

$$H_1 = \frac{H_2}{1000} \qquad (3)$$

Accordingly, if the equation (2) is substituted into the equation (1), then the following equation will be obtained

$$\frac{H_2}{1000} l_1 + 2H_2 l_2 = 1600[AT] \qquad (4)$$

Then, if the length magnetic path $l_1$ of the iron portion is 0.56m and the length $l_2$ of the vacant space is 0.015m, then the strength of magnetic field $H_2$ of the vacant space will be obtained through the following equation and becomes the strength of magnetic field for magnetizing the steel plate 21.

$$H_2 = 53,333[AT/m] \qquad (5)$$

In reality, there is a leakage. Assumption is made that the value of leakage is $1/2H_2$. Then, the strength of magnetic field, in which the electromagnet 22 magnetizes the steel plate 21, is about 26,000[AT/m]. On the other hand, the strength of magnetic field required for magnetically saturating carbon steel is 8,000 to 10,000[AT/m], so that the aforesaid electromagnet 22 can reliably magnetically saturate the steel plate 21.

Fig. 8 is an arrangement view showing one embodiment of the present invention. The aforesaid electromagnet 22 and detector 24 are disposed in opposed relationship to bridle rolls 32 located on the output side of an annealing furnace 31 through vacant space of 10 to 25mm, and the positive and negative magnetic poles of the electromagnet 22 are spaced apart from each other in the running direction of the steel plate 21. Furthermore, the electromagnet 22 and the detector 24 are spaced 500~600mm apart from each other so that the magnetic flux leaking from the electromagnet 22 does not affect the detector 24. Here, as shown in Fig. 9, a frame 33 and a guide rail 34 provided on the frame 33 are fixed around the bridle rolls 32, and a truck 35 is racked across the guide rail 34 in a manner to be transversely driven by a driving device 36 between a measuring position indicated by solid lines and a waiting position indicated by two-dot chain lines. A measuring head 37 is vertically movably supported by the truck 35 through a lifting device 35A. The aforesaid electromagnet 22 and detector 24 are affixed to the measuring head 37. More specifically, the steel plate 21 is magnetized by the electromagnet 22 under the conditions where the steel plate 22 is closely attached to the bridle rolls 32 to be free from vibration, i.e., under the conditions where an interval, through which the steel plate 21 is opposed to the electromagnet 22 and detector 24 is not fluctuated, the strength of residual magnetism thereof is detected, and the hardness thereof is indicated by the recorder 26. Here, the measuring head 37 can measure the hardness of the steel plate 21 at an arbitrary position in the widthwise direction through the transverse motion of the truck 35 driven by driving device 36. The aforesaid electromagnet 22 and detector 24 may be opposed to conveying rollers other than the bridle rolls 32 only if the electromagnet and detector are opposed to rollers which thread the steel plate 21 in a closely attached condition and being free from vibration.

Figs. 10(A) through 10(C) are explanatory views showing the results of actual operations of the embodiment shown in Fig. 8. More specifically, in Figs. 10(A), 10(B) and 10(C), the abscissa represents the length of time equal to one another. Fig. 10(A) shows the temperature of heating furnace and the temperature of equalizer furnace in the annealing furnace 31 as varied to intentionally produce a half-annealed coil. Fig. 10(B) shows outputs from a hardness tester which has continuously on-line measured coils 1C~6C of the steel plates annealed under the aforesaid operating conditions and threading materials 9 connecting coils to one another, i.e., the results of record of the recorder 26. Fig. 10(C) shows Rockwell hardness obtained through the sampling and measuring of the respective coils on-line measured and the threading materials corresponding to the respective measuring point.

In Fig. 10(B), the outputs from the hardness tester regarding the threading materials 9 indicate small and stabilized output values as commensurate to the fact that the threading materials 9 have turned into a soft quality by a plurality of times of annealing. Subsequently, when the coils 2C~3C are annealed under the rise of the temperature of heating furnace and temperature of equalizer furnace as shown in Fig. 10(A), recrystallization is completed in the central portion of the coil 2C. The outputs from the hardness tester regarding the coils 2C~3C gradually decrease as commensurate to the aforesaid recrystallization. After the completion of recrystallization, even if the temperature of heating furnace and temperature of equalizer furnace rise, constant output conditions are indicated as commensurate to no change in hardness. Likewise, with the coils 4C~6C, when recrystallization is made uncomplete through the adjustment of the temperature of heating furnace and temperature of equalizer furnace, outputs from the hardness tester shows changes as commensurate to changes in hardness of the respective coils.

In comparison between Figs. 10(B) and 10(C), it is recognizable that the output values emitted from the hardness tester regarding the aforesaid embodiment are well correlated with Rockwell hardnesses which have been obtained through the actual sampling. Fig. 11 is a graphic chart showing the correlation between the aforesaid outputs from the hardness tester and the Rockwell hardnesses obtained through sampling, and it is recognizable that the outputs from the hardness tester are satisfactory in accuracy. In Fig. 11, a region P indicates a region of product where recrystallization is completed by annealing and the Rockwell hardness is located within a range of 54~66, and a region Q indicates a region of half-annealed material where a low annealing temperature results in incomplete annealing, thus leading to incomplete recrystallization, and the hardness is in the range beyond the allowable hardness (66) for a product. Then, if a boundary value R is set for an output from the hardness tester as shown in Fig. 11, then it becomes possible to reject a half-annealed material by an output from the hardness tester.

**Claims**

1. Method of measuring on-line the hardness of a steel plate, wherein the steel plate (21) and an electromagnet (22) excited by a direct current are opposed to each other, the steel plate is movable along a first direction relative to the electromagnet, both north and south poles of the electromagnet (22) are spaced apart from each other in the first direction, the electromagnet magnetises the steel plate, the strength of residual magnetism is measured by a detector (24) and the hardness of the steel plate is sought on the basis of the strength of the measured residual magnetism, characterised in that a portion of the steel plate (21) is continuously magnetically saturated by one of the magnetic poles of the electromagnet (22) and is then continuously magnetically saturated in the reverse direction by the other of the magnetic poles of the electromagnet (22), and the strength of residual magnetism at the portion magnetically saturated is measured by the detector (24), and in that the detector (24) is fixedly arranged relative to the downstream side of the electromagnet (22).

2. Method of measuring on-line the hardness of a steel plate as set forth in Claim 1, wherein both the electromagnet (22) and the detector (24) are opposed to conveying rollers (32) for the steel plate (21).

3. Method of measuring on-line the hardness of a steel plate as set forth in Claim 1 or 2, wherein both the electromagnet (22) and the detector (24) are made transversely movable in the widthwise direction of the steel plate (21).

## Patentansprüche

1. Verfahren zum kontinuierlichen Messen der Härte einer Stahlplatte, wobei die Stahlplatte (21) und ein durch Gleichstrom erregter Elektromagnet (22) einander gegenüber angeordnet sind, die Stahlplatte längs einer ersten Richtung bezüglich des Elektromagneten beweglich ist, Nordpol und Südpol des Elektromagneten (22) einen gegenseitigen Abstand in der ersten Richtung einschließen, der Elektromagnet die Stahlplatte magnetisiert, die Stärke des remanenten Magnetismus von einem Detektor (24) gemessen wird und die Härte der Stahlplatte auf der Grundlage der Stärke des gemessenen remanenten Magnetismus gesucht wird, dadurch gekennzeichnet, daß ein Teil der Stahlplatte (21) von einem der Magnetpole des Elektromagneten (22) fortwährend magnetisch gesättigt wird und dann in umgekehrter Richtung vom anderen Magnetpol des Elektromagneten (22) fortwährend magnetisch gesättigt wird, und daß die Stärke des remanenten Magnetismus im magnetisch gesättigten Teil vom Detektor (24) gemessen wird, und daß der Detektor (24) in Bewegungsrichtung nach dem Elektromagneten (22) fest angeordnet ist.

2. Verfahren zum kontinuierlichen Messen der Härte einer Stahlplatte nach Anspruch 1, wobei sowohl der Elektromagnet (22) als auch der Detektor (24) gegenüber von Transportwalzen (32) für die Stahlplatte (21) angeordnet sind.

3. Verfahren zum kontinuierlichen Messen der Härte einer Stahlplatte nach Anspruch 1 oder 2, wobei sowohl Elektromagnet (22) als auch der Detektor (24) quer zur Breite der Stahlplatte (21) beweglich sind.

## Revendications

1. Procédé de mesure sur la chaîne de fabrication de la dureté d'une plaque d'acier, dans lequel la plaque d'acier (21) et un électro-aimant (22) excité par un courant continu sont opposés l'un à l'autre, la plaque d'acier est mobile suivant une première direction par rapport à l'électro-aimant, les pôles tant nord que sud de l'électro-aimant (22) sont espacés l'un de l'autre suivant la première direction, l'électro-aimant magnétise la plaque d'acier, l'intensité du magnétisme résiduel est mesurée par un détecteur (24) et la dureté de la plaque d'acier est recherchée en se basant sur l'intensité du magnétisme résiduel mesuré, caractérisé en ce qu'une partie de la plaque d'acier (21) est magnétiquement saturée en continu par l'un des pôles magnétiques de l'électro-aimant (22) puis magnétiquement saturée en continu dans le sens inverse par l'autre des pôles magnétiques de l'électro-aimant (22), et l'intensité du magnétisme résiduel de la partie magnétiquement saturée est mesurée par le détecteur (24), et en ce que le détecteur (24) est disposé de manière fixe par rapport au côté d'aval de l'électro-aimant (22).

2. Procédé de mesure sur la chaîne de fabrication de la dureté d'une plaque d'acier selon la revendication 1, dans lequel tant l'électro-aimant (22) que le détecteur (24) sont opposés à des rouleaux (32) de transport de la plaque d'acier (21).

3. Procédé de mesure sur la chaîne de fabrication de la dureté d'une plaque d'acier selon la revendication 1 ou 2, dans lequel tant l'électro-aimant (22) que le détecteur (24) sont rendus mobiles transversalement suivant la largeur de la plaque d'acier (21).

FIG. 1

3

1

5

magnetic
field
measurer

2 demagnetizer

direct
current
ammeter

4

ac
ammeter

constant-current
device

6

7

recorder

transformer

FIG. 2

permeating
magnetism

$(\frac{1}{20}Oe)$

hardness (HR30T)

0 096 078

FIG. 3

FIG. 4

FIG. 5

FIG. 6

FIG. 7

FIG. 8

FIG. 9

## FIG.10

• = temperature
of
heating
furnace

(A)

annealing
temperature

(°C)

○ = temperature of equalizer furnace

(B)

1C    9    2C    3C   9   4C   5C    6C

outputs
from
hardness
tester

(∇)

(C)

hardness

(HR30T)

5

FIG. 11